# EUROPÄISCHE PATENTSCHRIFT

(11) **EP 1 805 405 B1**
(45) Veröffentlichungstag und Bekanntmachung des Hinweises auf die Patenterteilung: **01.02.2012**
(21) Anmeldenummer: 05779191.5
(22) Anmeldetag: 13.09.2005
(51) Int. Cl.: F02D 41/22, G05B 23/02

(54) **VERFAHREN ZUM BETREIBEN EINES VERWALTUNGSSYSTEMS VON FUNKTIONSMODULEN**
METHOD FOR OPERATING A FUNCTION MODULE MANAGEMENT SYSTEM
PROCÉDÉ POUR EXPLOITER UN SYSTÈME ADMINISTRATIF DE MODULES DE FONCTIONS

(30) Priorität: 28.09.2004 DE 102004046874
(43) Veröffentlichungstag der Anmeldung: 11.07.2007
(73) Patentinhaber: ROBERT BOSCH GMBH, 70442 Stuttgart (DE)
(72) Erfinder: KESCH, Bernd, 71282 Hemmingen (DE); HILLNER, Hans, 71642 Ludwigsburg (DE); KNIRSCH, Matthias, 71701 Schwieberdingen (DE); HINZ, Alexander, 74343 Sachsenheim (DE)
(86) Internationale Anmeldenummer: PCT/EP2005/054547
(87) Internationale Veröffentlichungsnummer: WO 2006/034960

(56) Entgegenhaltungen:
- EP-A- 1 081 362
- WO-A-97/13064
- DE-A1- 19 731 116

## Beschreibung

### Stand der Technik

Die vorliegende Erfindung betrifft ein Verfahren zum Betreiben eines Verwaltungssystems von Funktionsmodulen. Insbesondere betrifft die Erfindung ein Verwaltungssystem, in dem sich einzelne Funktionsmodule mit Hilfe eines Inhibitormoduls zur Ausführung freigeben oder nicht freigeben lassen.

Obwohl nachfolgend die Erfindung in Bezug auf ein Diagnosesystem-Management (DSM) für eine Motoransteuerung beschrieben wird, ist die Erfindung darauf nicht beschränkt.

Ein Diagnosesystem-Management (DSM) wird unter anderem zum Steuern eines Betriebsablaufs eines Motors verwendet. Die Steuerung erfolgt nach vorgegebenen Programmabläufen und auf der Basis von Ereignissen, welche durch Sensoren erfasst werden und dem DSM mitgeteilt werden. Zusätzlich ermöglicht das DSM externen Analysemodulen die Programmabläufe während oder nach Testphasen und/oder während dem laufenden Betrieb eines Motors aufzuzeichnen und zu analysieren.

Aus der EP 1 081 362 A2 ist ein Verfahren zum gesteuerten Betrieb einer Brennkraftmaschine nach Fehlerdiagnose bekannt, bei dem zuerst in einer Diagnosefunktion aus verschiedenen Sensorsignalen auf Fehler der Vorrichtung geschlossen wird, daraus ein entsprechendes Bündel aus Betriebs- oder Steuerungseinschränkungsanforderungen abgeleitet wird, in einer Querbeeinflussungsprüfung eventuelle Querbeeinflussungen ausgefiltert werden und dann in einer Ablaufplanung alle Kombinationen aus Betriebs- oder Steuerungseinschränkungsanforderungen durchgespielt werden, bis diejenige Maßnahme bzw. Kombination aus Maßnahmen gefunden ist, welche die geringste Leistungseinbuße der Vorrichtung zur Folge hat.

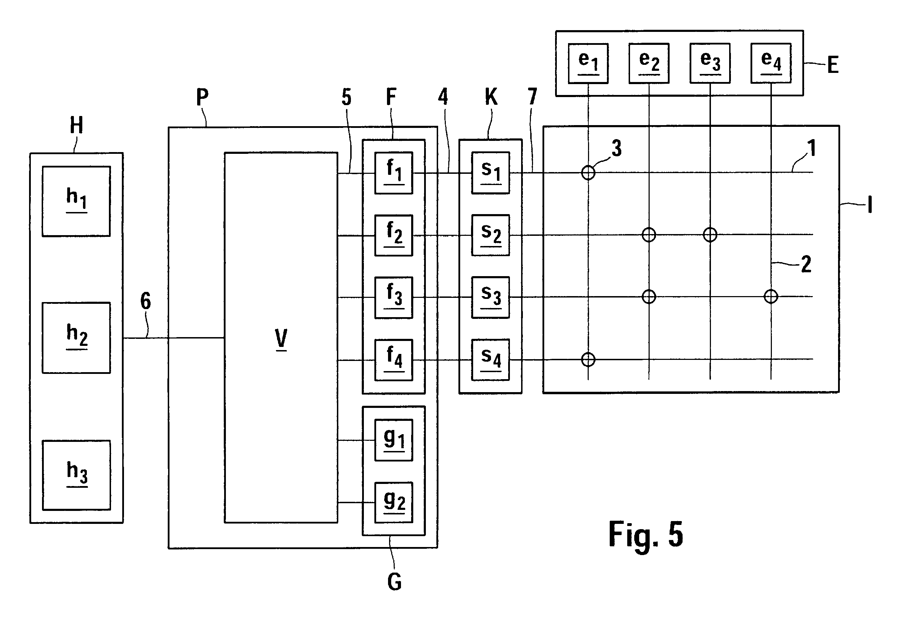

Unter Bezugnahme auf Fig. 5 wird ein schematischer Aufbau eines herkömmlichen DSM V für ein Steuerungssystem H eines Motors beschrieben. Der Betriebsablauf eines Motors umfasst eine sequentielle und/oder parallele Ausführung einer Mehrzahl von Funktionsmodulen h1-h3, wie zum Beispiel eine Ansteuerung für Zündkerzen, eine Tankentlüftung und eine Gasgemischadaption. Diese einzelnen Funktionsmodule hlh3 werden durch ein Steuersystem H ausgeführt. Die Funktionsmodule hl-h3 werden dem Steuersystem H durch das DSM V zum Ausführen bereitgestellt, wobei das DSM V diese Funktionsmodule h1-h3 aus einer ersten Menge F von ersten Funktionsmodulen f1-f4 und einer zweiten Menge G zweiter Funktionsmodulen g1-g2 auswählt.

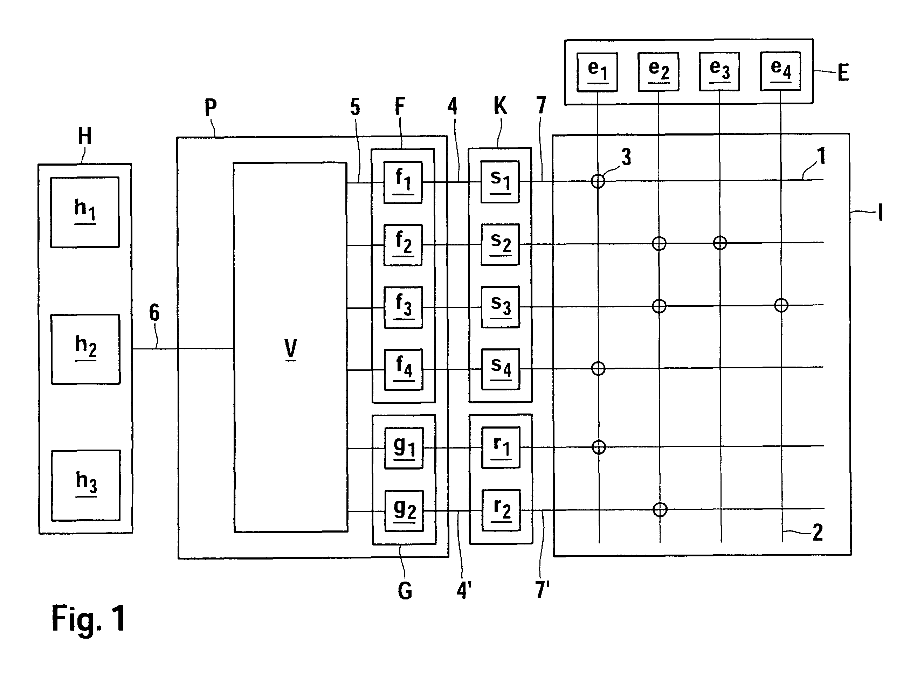

Bei einem Auftreten von Ereignissen e1-e4, vor allem von Fehlermeldungen, wie z.B. einer defekten Zündkerze, ist es sinnvoll manche der ersten Funktionsmodule f1-f4 nicht mehr dem Steuersystem H zur Ausführung bereitzustellen, so dass z.B. kein Benzin mehr in den entsprechenden Zylinder mit der defekten Zündkerze eingespritzt wird. Dazu ist in dem DSM V eine Ereigniserfassungseinrichtung E vorgesehen. Die Ereigniserfassungseinrichtung E erfasst die Ereignisse e1-e4 u. a. durch Sensoren,
welche z. B. die Zündkerze überwachen. Wird ein Ereignis e1-e4 erfasst, wird ein Inhibitormodul I aufgerufen. Das Inhibitormodul I weist eine Datenbank auf, welche das Ereignis e1-e4 mit den ersten Funktionsmodulen fl-f4 verknüpft. In dem in Fig.1 dargestellten Beispiel, sind dem Ereignis e1 die ersten Funktionsmodule f1 und f4 zugeordnet. Bei einem Auftreten des Ereignisses e1 soll dementsprechend eine Ausführung der ersten Funktionsmodule f1 und f4 unterbunden werden. Den ersten Funktionsmodulen fl-f4 sind Kontrollzustände s1-s4 zugeordnet, welche in Registern in einer Speichereinrichtung K gespeichert sind. Das Inhibitormodul I setzt die Kontrollzustände s1-s4 auf sperrend-kennzeichnend, wenn deren zugeordnete Ereignisse e1-e4 aufgetreten sind. In dem zuvor beschriebenen Fall werden somit die Kontrollzustände s1 und s4 auf sperrend-kennzeichnend gesetzt. Das Verwaltungssystem V fragt die Kontrollzustände s1-s4 ab. Sind diese Kontrollzustände s1-s4 auf sperrend-kennzeichnend gesetzt, gibt das Verwaltungssystem V die entsprechenden ersten Funktionsmodule fl-f4 nicht zur Ausführung frei und stellt sie somit dem Steuerungssystem H nicht mehr zum Ausführen bereit.

Durch Auslesen der Speichereinrichtung K kann ermittelt werden, welche Funktionsmodule fl-f4 im Verlauf einer Testphase oder einer Fahrt gesperrt wurden. Dies ist zweckmäßig für eine Diagnose des Motorbetriebs durch das Analysemodul.

Die zweiten Funktionsmodule gl-g2 werden nur ausgeführt, wenn ein entsprechendes Ereignis el-e4 auftritt oder aufgetreten ist. Das Verwaltungssystem V kann u.a. ein zweites Funktionsmodul g1-g2 anstelle eines gesperrten Funktionsmoduls fl-f4 dem Steuerungssystem H bereitstellen. Welche der zweiten Funktionsmodule gl-g2 bereitgestellt werden, ermittelt das Verwaltungssystems V u.a. auf Basis von internen Algorithmen des Verwaltungssystems V. Hierbei können z. B. den einzelnen Funktionsmodulen fl-f4, g1-2 Prioritäten zugeordnet sein und beim Sperren eines priorisierten Funktionsmoduls wird das nächst priorisierte Funktionsmodul bereitgestellt.

Nachteiliger Weise ist bei diesem Verfahren für ein externes Analysemodul nicht transparent, welche der zweiten Funktionsmodule g1-g2 nach dem Auftreten eines Ereignis e1-e4 durch das DSM V bereitgestellt werden können. Für eine Analyse benötigt daher ein Analysemodul Kenntnisse über die internen Algorithmen des Verwaltungssystems V und muss daher an jedes neue DSM angepasst werden.

Ein weiterer Nachteil ist, dass das Verwaltungssystem V für ein zweites Funktionsmodul g1-g2 all die dem zweiten Funktionsmodul gl-g2 zugeordneten Ereignisse e1-e4 überprüfen muss, bevor das Verwaltungssystem V festlegen kann, ob dieses zweite Funktionsmodul gl-g2 zur Ausführung durch durch das Steuersystem H freigebbar oder nicht freigebbar ist.

### Vorteile der Erfindung

Es ist eine Aufgabe der vorliegenden Erfindung ein Verfahren zum Betreiben eines Verwaltungssystems bereitzustellen, welches die zuvor genannten Probleme löst.
Die vorliegende Erfindung stellt ein Verfahren zum Betreiben eines Verwaltungssystems bereit, welches eine Vielzahl an ersten und zweiten Funktionsmodulen verwaltet, wobei ein erstes Funktionsmodul nicht zu einer Ausführung freigegeben wird, wenn ein zugehöriger erster Kontrollzustand dieses erste Funktionsmodul als sperrend kennzeichnet und ein zweites Funktionsmodul nicht zur Ausführung freigibt, wenn ein zweiter Kontrollzustand dieses zweite Funktionsmodul als nicht ausführbar kennzeichnet. In einer ersten Datenbank ist jedem ersten Kontrollzustand eine erste Ereignismenge zugeordnet, welche leer ist oder mindestens ein Ereignis aufweist, und eine zweite Datenbank, welche jedem zweiten Kontrollzustand eine zweite Ereignismenge zuordnet, welche entweder leer ist oder mindestens ein Ereignis aufweist. Erfasst ein Ereigniserfassungsmodul ein oder mehrere Ereignisse, wird ein Inhibitormodul ausgeführt. Dieses Inhibitormodul setzt alle ersten Kontrollzustände auf sperrend-kennzeichnend, wenn mindestens eines der erfassten Ereignisse in der einen dem ersten Kontrollzustand zugeordneten ersten Ereignismenge enthalten ist und setzt all die zweiten Kontrollzustände auf ausführbar-kennzeichnend, wenn mindestens eines der erfassten Ereignisse in der dem zweiten Kontrollzustand zugeordneten Ereignismenge enthalten ist.

Ein Vorteil der vorliegenden Erfindung ist, dass jedem zweiten Funktionsmodul ein zweiter Kontrollzustand zugeordnet ist, welcher angibt, ob das zweite Funktionsmodul zur Ausführung durch das Verwaltungssystem bereitgestellt werden kann oder nicht. Damit reduziert sich der Ressourcenaufwand sowie der Zeitaufwand für das Verwaltungssystem, um festzustellen, ob das entsprechende zweite Funktionsmodul bereitgestellt werden kann oder nicht, indem der entsprechende zweite Kontrollzustand überprüft wird.

Eine bevorzugte Weiterbildung der vorliegenden Erfindung sieht vor, dass das Inhibitormodul den ersten und den zweiten Kontrollzustand in einer Speichereinrichtung abspeichert und das Verwaltungssystem den ersten und zweiten Kontrollzustand aus der Speichereinrichtung ausliest. Ein externes Analysemodul kann somit durch alleiniges Auslesen der Speichereinrichtung erfassen, welche der ersten und zweiten Funktionsmodule gesperrt bzw. freigeben sind.

Eine bevorzugte Weiterbildung der vorliegenden Erfindung sieht vor, dass jedem Funktionsmodul in der Speichereinrichtung ein Statusregister zugeordnet ist, wobei in einer ersten Speicherstelle des Statusregisters der erste Kontrollzustand und in einer zweiten Speicherstelle des Statusregisters der zweite Kontrollzustand abspeicherbar ist.

Eine bevorzugte Weiterbildung der vorliegenden Erfindung sieht vor, dass die erste und die zweite Speicherstelle eine identische Speicherstelle sind.

Eine bevorzugte Weiterbildung der vorliegenden Erfindung sieht vor, dass die erste und die zweite Speicherstelle jeweils den gleichen Speicherwert aufweisen, wenn der erste Kontrollzustand sperrend-kennzeichnend ist und der zweite Kontrollzustand nicht ausführbar-kennzeichnend ist oder der erste Kontrollzustand nicht sperrend-kennzeichnend ist und der zweite Kontrollzustand ausfiihrbar-kennzeichnend ist. Dadurch ist vorteilhafter Weise keine Unterscheidung nach ersten und zweiten Funktionsmodulen bei der Auswertung der Register notwendig.

Eine bevorzugte Weiterbildung der vorliegenden Erfindung sieht vor, dass in dem Statusregister eine dritte Speicherstelle vorgesehen ist, welche angibt, ob das Verwaltungssystem zu einem Funktionsmodul den ersten oder den zweiten Kontrollzustand auswertet.

Eine bevorzugte Weiterbildung der vorliegenden Erfindung sieht vor, dass das Inhibitormodul jedes Mal ausgeführt wird, nachdem das Ereigniserfassungsmodul ein einzelnes Ereignis erfasst.

Eine bevorzugte Weiterbildung der vorliegenden Erfindung sieht vor, dass in einem ersten Schritt ein Zurücksetzen erfolgt, wobei alle ersten Kontrollzustände auf nicht sperrend-kennzeichnend und alle zweiten Kontrollzustände auf nicht ausfiihrbar-kennzeichnend gesetzt werden.

Eine bevorzugte Weiterbildung der vorliegenden Erfindung sieht vor, dass nach einem Zurücksetzen eine Schleife alle möglichen Ereignisse auf ihr Eintreten hin abfragt und die ersten und zweiten Kontrollzustände entsprechend dem Eintreten oder Nicht-Eintreten der Ereignisse gesetzt werden.

Eine bevorzugte Weiterbildung der vorliegenden Erfindung sieht vor, die ersten und zweiten Kontrollzustände nach dem Ausführen der Schleife nur dann gesetzt werden, wenn ein Ereignis eintritt.

### ZEICHNUNGEN

Nachfolgend werden unter Bezugnahme auf die beiliegenden Figuren Ausführungsbeispiele der ErFmdung näher erläutert.

In den Figuren zeigen:
- Fig.1: eine schematische Darstellung für die Verknüpfung eines Verwaltungssystems mit Ereignissen;
- Fig. 2: eine schematische Darstellung der Speicherbelegung eines Registers durch erste und zweite Kontrollzustände;
- Fig. 3: eine schematische Darstellung einer weiteren Ausführungsform der Speicheranordnung eines ersten und/oder zweiten Kontrollzustandes in einem Register;
- Fig. 4: eine schematische Darstellung eines Flussdiagramms eines ersten Schrittes einer Ausführungsform; und
- Fig. 5: eine schematische Darstellung einer Verknüpfung eines Verwaltungssystems mit Ereignissen nach dem Stand der Technik.

### BESCHREIBUNG DER AUSFÜHRUNGSBEISPIELE

In Fig. 1 ist eine schematische Darstellung einer Ausführungsform der vorliegenden Erfindung dargestellt. Ein Verwaltungssystem V verwaltet eine erste Menge an Funktionen F und eine zweite Menge an Funktionen G, wobei die erste Menge an Funktionen F erste Funktionsmodule fl-f4 umfasst und die zweite Funküonsmenge G zweite Funktionsmodule gl-g2 umfasst. Hierbei ist die Zahl der Funktionsmodule nur exemplarisch zu sehen. Die Funktionsmodule f1-f4, g1-g2 stellen Funktionen für die Ansteuerung der Zündkerzen, die Belüftung der Zylinder, die Gemischadaption u. Ä. bereit. Das Verwaltungssystem V stellt eine oder mehrere dieser Funktionsmodule einem Steuersystem H zur Verfügung, welches die zur Verfügung gestellten Funktionsmodule h1-h3 ausführt.

Jedem ersten Funktionsmodul fl-f4 ist über eine Verknüpfung 4 ein erster Kontrollzustand sl-s4 zugeordnet. Dieser erste Kontrollzustand weist zwei Zustände auf "nicht sperrend-kennzeichnend" und "sperrend-kennzeichnend". Ist der erste Kontrollzustand s1-s4 sperrend-kennzeichnend, dann wird das erste Funktionsmodul fl-f4 durch das Verwaltungssystem V nicht bereitgestellt, d.h. das Steuerungssystem H kann dieses Funktionsmodul fl-f4 nicht ausführen. Im gegenteiligen Fall kann das erste Funktionsmodul fl-f4 durch das Verwaltungssystem V freigegeben werden.

Der erste Kontrollzustand s1-s4 wird auf sperrend-kennzeichnend gesetzt, wenn ein Ereignis e1-e4 auftritt, welches eine erste Datenbank diesem ersten Kontrollzustand sl-s4 zuordnet. In dem Fall des ersten Kontrollzustands s2 in der Darstellung in Fig. 1 sind z.B. die Ereignisse e2 und e3 mit dem ersten Kontrollzustand s2 verbunden, wie graphisch über eine Verknüpfung 3, Ereignispfade 2 und Funktionspfade 1 angedeutet. Die Auswertung der ersten Datenbank mit den Verknüpfungen 3 der ersten Kontrollzustände s1-s4 und den Ereignissen e1-e4 erfolgt durch ein Inhibitormodul I, welches zugleich die entsprechenden ersten Kontrollzustände s1-s4 auf sperrend-kennzeichnend setzt, wenn das entsprechende Ereignis e1-e4 auftritt.

Den zweiten Funktionsmodulen g1-g2 sind zweite Kontrollzustände r1-r2 zugeordnet. Die zweiten Kontrollzustände r1-r2 weisen die folgenden Zustände auf: "nicht ausführbar-kennzeichnend" oder "ausfiihrbar-kennzeichnend." Im Fall von ausführbar-kennzeichnend werden die zweiten Funktionsmodule g1-g2 durch das Verwaltungssystem V dem Steuersystem H zur Ausführung freigegeben und können somit durch das Steuersystem H ausgeführt werden. Im anderen Fall, werden die zweiten Funktionsmodule g1-g2 nicht zur Ausführung freigegeben und können somit nicht durch das Steuersystem H ausgeführt werden.

Die zweiten Kontrollzustände r1-r2 werden entsprechend den ersten Kontrollzuständen s1-s4 auf Basis der Ereignisse e1-e4 gesetzt. Hierbei werden die zweiten Kontrollzustände r1-r2 auf ausführbar-kennzeichnend gesetzt, wenn ein ihnen entsprechendes Ereignis el-e4 auftritt. Die Verknüpfungen der zweiten Kontrollzustände r1-r2 mit den Ereignissen e1-e4 erfolgt durch eine zweite Datenbank. Die zweite Datenbank wird ebenfalls durch das Inhibitormodul I ausgewertet und das Inhibitormodul setzt entsprechend bei einem Auftreten eines Ereignisses el-e4 die zweiten Kontrollzustände rl-r2 auf ausführbar-kennzeichnend.

Die Kontrollzustände s1-s4, rl-r2 werden von dem Inhibitormodul I in einer Speichereinrichtung K abgespeichert. Das Verwaltungssystem V kann durch eine Schnittstelle auf die Speichereinrichtung K zugreifen und liest die Kontrollzustände s1-s4, r1-r2 aus, um zu entscheiden, welche Funktionsmodule fl-f4, gl-g2 zur Ausführung durch das Steuerungssystem H freigebbar sind. Vorteilhafter Weise muss das Verwaltungssystem V nur die Kontrollzustände s1-s4, r1-r2 für diese Entscheidung einlesen und eine einzelne Überprüfung der Ereignisse e1-e4 für eine Freigabe der zweiten Funktionsmodule g1-g2 ist nicht notwendig.

Die Ereignisse e1-e4 werden von einer Ereigniserfassungseinrichtung E erfasst. Die Ereigniserfassungseinrichtung E weist eine Mehrzahl an Sensoren auf, welche den aktuellen Betriebszustand eines Motors überwachen. In einer Ausführungsform kann die Ereigniserfassungseinrichtung E einen Aufruf des Inhibitormoduls I auslösen in einer zweiten Ausführungsform fragt das Inhibitormodul I die Ereigniserfassungseinrichtung E auf Vorliegen eines Ereignisses el-e4 zyklisch ab.

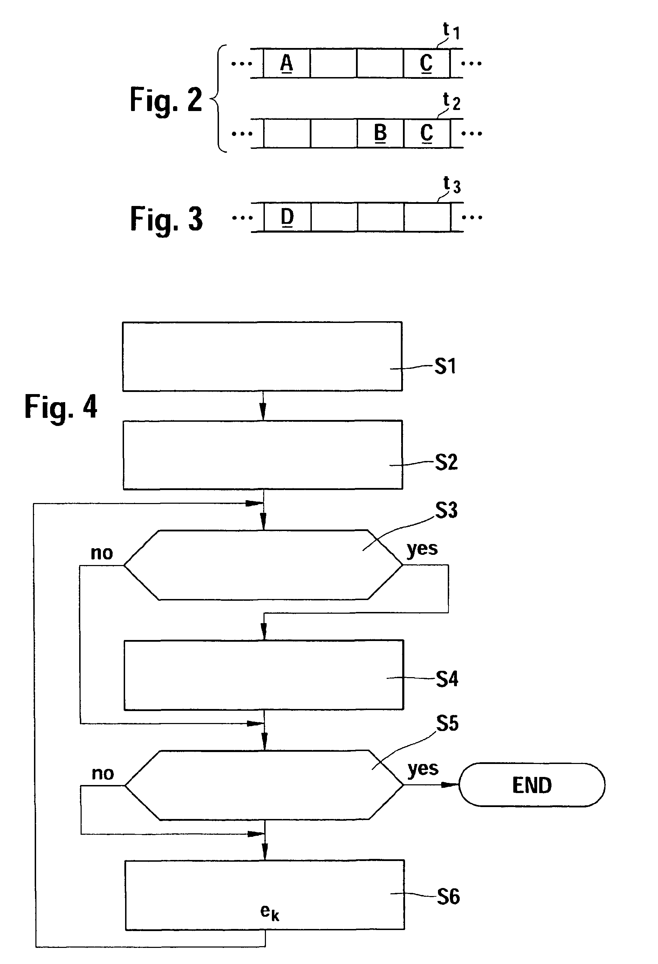

In Fig. 2 ist eine schematische Darstellung von zwei Registem t1 und t2 der Speichereinrichtung K einer Ausfühmngsform dargestellt. Der erste Kontrollzustand sl-s4 wird in einem ersten Speicherbereich A des Registers t1 abgelegt. Der zweite Kontrollzustand rl-r2 wird in einem zweiten Speicherbereich B des Registers t2 abgelegt. In der dargestellten Ausführungsform sind der erste Speicherbereich A und der zweite Speicherbereich B an nicht identischen Speicherstellen. Das Verwaltungssystem V liest die Speicherstellen A, B mit Hilfe einer Methodenfunktion aus, welche die dem ersten Kontrollzustand s1-s4 bzw. dem zweiten Kontrollzustand r1-r2 entsprechende Speicherstelle auswählt. Zusätzlich kann in den Registern t1, t2 eine dritte Speicherstelle C vorgesehen sein, welche angibt, welche der beiden Speicherstellen A, B für die Freigabe bzw. das Sperren des Funktionsmoduls maßgeblich ist. Dies ist für externe Analysemodule vorgesehen, welche somit keine a priori Kenntnisse über die den Registern t1, t2 zugeordneten Funktionsmodule benötigen. Die dritte Speicherstelle C kann auch von dem Verwaltungssystem V genutzt werden.

In Fig. 3 ist eine schematische Darstellung eines Registers t3 einer weiteren Ausführungsform dargestellt. Hierbei werden der erste Kontrollzustand s1-s4 und der zweite Kontrollzustand rl-r2 in dem gleichen Speicherbereich D abgelegt. Hierbei entspricht ein Speicherwert für sperrend-kennzeichnend eines ersten Kontrollzustandes s1-s4 einem nicht ausführbar-kennzeichnend eines zweiten Kontrollzustandes rl-r2 und respektive ein Speicherwert nicht sperrend-kennzeichnend eines ersten Kontrollzustandes sl-s4 ausführbar-kennzeichnend eines zweiten Kontrollzustandes rl-r2. Damit kann bei dem einen Speicherwert das Funktionsmodul durch das Verwaltungssystem V bereitgestellt werden und muss bei dem zweiten Speicherwert gesperrt werden, unabhängig davon, ob dem Register ein erstes oder zweites Funktionsmodul zugeordnet ist. Vorteilhafter Weise muss daher weder das Verwaltungssystem V noch eine externes Analysemodul zwischen den ersten und zweiten Kontrollzuständen s1-s4, r1-r2 unterscheiden. Jedoch ist es notwendig, alle ersten und zweiten Kontrollzustände entsprechend einem in Fig. 4 beschriebenen Verfahren in einem ersten Schritt des Verfahrens zu setzen, dies kann u.a. bei einem Neustart des Steuersystems erfolgen.

Fig. 4 zeigt schematisch ein Flussdiagramm eines ersten Schrittes einer Ausführungsform. Zu Beginn erfolgt ein Zurücksetzen aller Kontrollzustände, indem alle ersten Kontrollzustände s1-s4 auf ausführbar-kennzeichnend gesetzt werden S1 und alle zweiten Kontrollzustände r1-r2 auf sperrend-kennzeichnend gesetzt werden S2. Dies entspricht der Anfangssituation, dass alle ersten Funktionsmodule fl-f4 durch das Verwaltungssystem V freigegeben werden können und alle zweiten Funktionsmodule gl-g2 nicht durch das Verwaltungssystem V freigegeben werden. Sind die ersten und zweiten kontrollzustände s1-s4 r1-r2 entsprechend gesetzt, mag es vorteilhaft sein, eine Schleife auszuführen, welche alle Ereignisse e1-e4, welche mit dem Verwaltungssystem V verknüpft sind, abzufragen, ob sie eingetreten sind oder nicht S3. Und nachfolgend gegebenenfalls das Inhibitormodul I ausführen S4, so dass entsprechend den eingetretenen Ereignissen e1-e4 die ersten und zweiten Kontrollzustände s1-s4, r1-r2 gesetzt werden. Der Vorteil eines Abarbeitens einer solchen Schleife ergibt sich insbesondere dann, wenn das Ereigniserfassungsmodul E nur auf eine Änderung, also auf ein Eintreten eines neuen Ereignisses e1-e4, reagiert. Bereits zuvor erfasste oder permanent erfasste Ereignisse e1-e4 würde eine solche Ereigniserfassungseinrichtung E nicht erfassen. Dementsprechend würden die ersten und zweiten Kontrollzustände s1-s4, rl-r2 nach einem Zurücksetzen möglicherweise fehlerhaft gesetzt bleiben. Hingegen ist es vorteilhaft, nachdem einmal alle Kontrollzustände gesetzt sind, nur noch auf Änderung, also neu auftretende Ereignisse e1-e4 zu reagieren, um eine Systemlast durch die Ereigniserfassungseinrichtung E und das Ausführen des Inhibitormoduls I gering zu halten. Vorteilhafter Weise greift das Inhibitormodul I auf eine erste und eine zweite Datenbank zurück, welche zentral zugänglich sind. Durch Anpassen der ersten und zweiten Datenbank ist es möglich, das Steuerverhalten des Verwaltungssystems V mit einer zentralen Datenänderung an neue Verwaltungsvorgaben anzupassen.

Eine eindeutige Zuordnung eines Funktionsmoduls zu ersten und zweiten Funktionsmodulen ist nicht zwingend notwendig, sondern ein Funktionsmodul kann beiden Mengen zugehörig sein.

### BEZUGSZEICHENLISTE

| | |
|---|---|
| 1 | Funktionspfad |
| 2 | Ereignispfad |
| 3 | Verknüpfung |
| 1 | Inhibitormodul |
| P | Ablaufssteuerungseinrichtung |
| K | Speichereinrichtung |
| V | Verwaltungssystem |
| s1-s4 | erster Kontrollzustand |
| r1, r2 | zweiter Kontrollzustand |
| A, B, C | erste, zweite, dritte Speicherstelle |
| D | Speicherstelle |
| t1, t2, t2 | Statusregister |
| F | Menge der ersten Funktionsmodule |
| fl-f4 | erste Funktionsmodule |
| H | Steuerungssystem |
| h1-h3 | ausführbare Funktionsmodule |
| E | Ereigniserfassungseinrichtung |
| el-e4 | Ereignisse |
| G | Menge der zweiten Funktionsmodule |
| g1, g2 | zweite Funktionsmodule |

## Patentansprüche

1. Verfahren zum Betreiben eines Verwaltungssystems (V), welches eine Vielzahl an ersten Funktionsmodulen (f1-f4) und zweiten Funktionsmodulen (g1-g2) verwaltet;
wobei das Verwaltungssystem (V) das erste Funktionsmodul (f1-f4) nicht zur Ausführung freigibt, wenn ein zugehöriger erster Kontrollzustand (s1-s4) das erste Funktionsmodul (f1-f4) als gesperrt kennzeichnet und das zweite Funktionsmodul (g1-g2) nicht zur Ausführung freigibt, wenn ein zweiter Kontrollzustand (r1-r2) das zweite Funktionsmodul (g1-g2) als nicht ausführbar kennzeichnet;
wobei eine erste Datenbank jedem ersten Kontrollzustand (s1-s4) eine erste Ereignismenge zuordnet, welche leer ist oder mindestens ein Ereignis (e1-e4) enthält und eine zweite Datenbank jedem zweiten Kontrollzustand (r1-r2) eine zweite Ereignismenge zuordnet, welche leer ist oder mindestens ein Ereignis (e1-e4) aufweist;
mit den Schritten:
Erfassen von einem oder mehreren Ereignissen (e1-e4) mittels einer Ereigniserfassungseinrichtung (E);
Ausführen eines Inhibitormoduls (I), welches basierend auf der ersten Datenbank all die ersten Kontrollzustände (s1-s4) auf sperrend-kennzeichnend setzt, deren zugeordnete Ereignismenge mindestens eines der erfassten Ereignisse (e1-e4) enthält und basierend auf der zweiten Datenbank all die zweiten Kontrollzustände (r1-r2) auf ausführbar-kennzeichnend setzt, deren zugeordnete Ereignismenge mindestens eines der erfassten Ereignisse (e1-e4) enthält.

2. Verfahren nach Anspruch 1, wobei das Inhibitormodul (I) den ersten (s1-s4) und den zweiten Kontrollzustand (r1-r2) in einer Speichereinrichtung (K) abspeichert und das Verwaltungssystem (V) den ersten (s1-s4) und den zweiten Kontrollzustand (r1-r2) aus der Speichereinrichtung (K) ausliest.

3. Verfahren nach Anspruch 1 oder 2, wobei jedem Funktionsmodul (f1-f4 g1-g2) in der Speichereinrichtung (K) ein Statusregister (t1-t3) zugeordnet ist, wobei in einer ersten Speicherstelle (A) des Statusregisters (t1-t3) der erste Kontrollzustand (s1-s4) und in einer zweiten Speicherstelle (B) des Statusregisters (t1-t3) der zweite Kontrollzustand (r1-r2) abspeicherbar ist.

4. Verfahren nach Anspruch 3, wobei die erste (A) und die zweite Speicherstelle (B) eine identische Speicherstelle (D) sind.

5. Verfahren nach einem der Ansprüche 2 bis 4, wobei die erste (A) und die zweite Speicherstelle (B) einen ersten Speicherwert aufweisen, wenn der erste Kontrollzustand (s1-s4) sperrend-kennzeichnend ist oder der zweite Kontrollzustand (r1-r2) nicht ausführbar-kennzeichnend ist und einen zweiten Speicherwert aufweisen, wenn der erste Kontrollzustand (s1-s4) nicht sperrend-kennzeichnend ist oder der zweite Kontrollzustand (r1-r2) ausführbar-kennzeichnend ist.

6. Verfahren nach einem der Ansprüche 3 bis 5, wobei in dem Statusregister (t1-t2) eine dritte Speicherstelle (C) vorgesehen ist, welche angibt, ob das Verwaltungssystem (V) zu einem Funktionsmodul (f1-f4, g1-g2) den ersten (s1-s4) oder den zweiten Kontrollzustand (r1-r2) auswertet.

7. Verfahren nach einem der vorhergehenden Ansprüche, wobei das Inhibitormodul (I) jedes Mal ausgeführt wird, nachdem das Ereigniserfassungsmodul (E) ein einzelnes Ereignis (e1-e4) erfasst.

8. Verfahren nach einem der vorhergehenden Ansprüche, wobei in einem ersten Schritt ein Zurücksetzen (S1, S2) erfolgt, wobei alle ersten Kontrollzustände (s1-s4) auf nicht sperrend- kennzeichnend (S1) und alle zweiten Kontrollzustände (r1-r2) auf nicht ausführbar-kennzeichnend (S2) gesetzt werden.

9. Verfahren nach Anspruch 8, wobei nach einem Zurücksetzen (S1, S2) eine Schleife (S5) alle möglichen Ereignisse (e1-e4 auf ihr Eintreten hin abfragt (S3) und die ersten (s1-s4) und zweiten Kontrollzustände (r1-r2) entsprechend dem Eintreten oder Nicht-Eintreten der Ereignisse (e1-e4) gesetzt werden.

10. Verfahren nach dem Anspruch 9, wobei die ersten (s1-s4) und zweiten Kontrollzustände (r1-r2) nach dem Ausführen der Schleife (S5) nur dann gesetzt werden, wenn ein Ereignis (e1-e4) eintritt.

## Claims

1. Method for the operation of a management system (V) which manages a multiplicity of first functional modules (f1-f4) and second functional modules (gl-g2);
wherein the management system (V) does not release the first functional module (f1-f4) for execution if an associated first control state (s1-s4) denotes the first functional module (f1-f4) as inhibited, and does not release the second functional module (gl-g2) for execution if a second control state (r1-r2) denotes the second functional module (gl-g2) as non-executable;
wherein a first database assigns to each first control state (s1-s4) a first set of events which is empty or contains at least one event (e1-e4), and a second database assigns to each second control state (r1-r2) a second set of events which is empty or has at least one event (e1-e4);
having the following steps:
one or more events (e1-e4) are detected by means of an event detection device (E);
an inhibitor module (I) is executed which takes the first database as a basis for setting all the first control states (s1-s4) whose associated set of events contains at least one of the detected events (e1-e4) to denoting inhibiting and takes the second database as a basis for setting all the second control states (r1-r2) whose associated set of events contains at least one of the detected events (e1-e4) to denoting executable.

2. Method according to Claim 1, wherein the inhibitor module (I) stores the first (s1-s4) and second (r1-r2) control states in a memory device (K), and the management system (V) reads the first (s1-s4) and second (r1-r2) control states from the memory device (K).

3. Method according to Claim 1 or 2, wherein each functional module (f1-f4, g1-g2) has an associated status register (t1-t3) in the memory device (K), wherein a first memory location (A) in the status register (t1-t3) can be used to store the first control state (s1-s4) and a second memory location (B) in the status register (t1-t3) can be used to store the second control state (rl-r2).

4. Method according to Claim 3, wherein the first (A) and second (B) memory locations are an identical memory location (D).

5. Method according to one of Claims 2 to 4, wherein the first (A) and second (B) memory locations have a first memory value when the first control state (s1-s4) is denoting inhibiting or the second control state (r1-r2) is denoting non-executable and have a second memory value when the first control state (s1-s4) is denoting non-inhibiting or the second control state (r1-r2) is denoting executable.

6. Method according to one of Claims 3 to 5, wherein the status register (t1-t2) contains a third memory location (C) which indicates whether the management system (V) evaluates the first (s1-s4) or the second (r1-r2) control state for a functional module (f1-f4, g1-g2).

7. Method according to one of the preceding claims, wherein the inhibitor module (I) is executed each time after the event detection module (E) detects a single event (e1-e4).

8. Method according to one of the preceding claims, wherein a first step involves a reset (S1, S2) being performed, wherein all first control states (s1-s4) are set to denoting non-inhibiting (S1) and all second control states (r1-r2) are set to denoting non-executable (S2).

9. Method according to Claim 8, wherein after a reset (S1, S2) a loop (S5) polls all possible events (e1-e4) for their occurrence (S3) and the first (s1-s4) and second (r1-r2) control states are set according to the occurrence or non-occurrence of the events (e1-e4).

10. Method according to Claim 9, wherein the first (s1-s4) and second (r1-r2) control states are set after the execution of the loop (S5) only if an event (e1-e4) occurs.

## Revendications

1. Procédé d'exploitation d'un système de gestion (V) qui gère une pluralité de premiers modules fonctionnels (f1 - f4) et de deuxièmes modules fonctionnels (g1 - g2) ;
le système de gestion (V) n'autorisant pas l'exécution du premier module fonctionnel (f1 - f4) lorsqu'un premier état de contrôle (s1 - s4) associé signale le premier module fonctionnel (f1 - f4) comme étant bloqué et n'autorisant pas l'exécution du deuxième module fonctionnel (g1 - g2) lorsqu'un deuxième état de contrôle (r1 - r2) signale le deuxième module fonctionnel (g1 - g2) comme étant non exécutable ;
une première base de données attribuant à chaque premier état de contrôle (s1 - s4) un premier nombre d'événements qui est vide ou qui contient au moins un événement (e1 - e4) et une deuxième base de données attribuant à chaque deuxième état de contrôle (r1 - r2) un deuxième nombre d'événements qui est vide ou qui présente au moins un événement (e1 - e4) ;
comprenant les étapes suivantes :
détection d'un ou de plusieurs événements (e1 - e4) au moyen d'un dispositif de détection d'événement (E) ;
exécution d'un module inhibiteur (I) qui, en se basant sur la première base de données, place en signalisation de blocage tous les premiers états de contrôle (s1 - s4) dont le nombre d'événements associé contient au moins l'un des événements (e1 - e4) détectés et, en se basant sur la deuxième base de données, place en signalisation d'exécutable tous les deuxièmes états de contrôle (r1 - r2) dont le nombre d'événements associé contient au moins l'un des événements (e1 - e4) détectés.

2. Procédé selon la revendication 1, selon lequel le module inhibiteur (I) mémorise le premier (s1 - s4) et le deuxième état de contrôle (r1 - r2) dans un dispositif de mémorisation (K) et le système de gestion (V) lit le premier (s1 - s4) et le deuxième état de contrôle (r1 - r2) depuis le dispositif de mémorisation (K).

3. Procédé selon la revendication 1 ou 2, selon lequel un registre d'état (t1 - t3) est associé à chaque module fonctionnel (f1 - f4, g1 - g2) dans le dispositif de mémorisation (K), le premier état de contrôle (s1 - s4) pouvant être mémorisé dans un premier emplacement de mémoire (A) du registre d'état (t1 - t3) et le deuxième état de contrôle (r1 - r2) pouvant être mémorisé dans un deuxième emplacement de mémoire (B) du registre d'état (t1 - t3).

4. Procédé selon la revendication 1, selon lequel le premier (A) et le deuxième emplacement de mémoire (B) sont un emplacement de mémoire (D) identique.

5. Procédé selon l'une des revendications 2 à 4, selon lequel le premier (A) et le deuxième emplacement de mémoire (B) présentent une première valeur mémorisée lorsque le premier état de contrôle (s1 - s4) signale le blocage ou le deuxième état de contrôle (r1 - r2) signale l'impossibilité d'exécution et présentent une deuxième valeur mémorisée lorsque le premier état de contrôle (s1 - s4) signale le non blocage ou le deuxième état de contrôle (r1 - r2) signale la possibilité d'exécution.

6. Procédé selon l'une des revendications 3 à 5, selon lequel un troisième emplacement de mémoire (C) est prévu dans le registre d'état (t1 - t2), lequel indique si le système de gestion (V) évalue le premier (s1 - s4) ou le deuxième état de contrôle (r1 - r2) pour un module fonctionnel (f1 - f4, g1 - g2).

7. Procédé selon l'une des revendications précédentes, selon lequel le module inhibiteur (I) est exécuté à chaque fois que le dispositif de détection d'événement (E) a détecté un événement (e1 - e4) individuel.

8. Procédé selon l'une des revendications précédentes, selon lequel une réinitialisation (S1, S2) a lieu dans une première étape, tous les premiers états de contrôle (s1 - s4) étant placés en signalisation de non blocage (S1) et tous les deuxièmes états de contrôle (r1 - r2) étant placés en signalisation de non exécutable (S2).

9. Procédé selon la revendication 8, selon lequel, après la réinitialisation (S1, S2), une boucle (S5) interroge tous les événements (e1 - e4) possibles pour vérifier s'ils sont survenus (S3) et les premiers (s1 - s4) ainsi que les deuxièmes états de contrôle (r1 - r2) sont définis en fonction de la survenance ou de la non-survenance des événements (e1 - e4).

10. Procédé selon la revendication 9, selon lequel les premiers (s1 - s4) et les deuxièmes états de contrôle (r1 - r2) ne sont définis après l'exécution de la boucle (S5) que lorsqu'un événement (e1 - e4) survient.
